# EUROPEAN PATENT SPECIFICATION

(11) **EP 0 526 441 B1**
(45) Date of publication and mention of the grant of the patent: **24.05.1995**
(21) Application number: 92870106.9
(22) Date of filing: 17.07.1992
(51) Int. Cl.: C09D 5/14

(54) **Self-polishing antifouling marine paints**
Selbstpolierende anwachsverhindernde Unterwasser -Anstrichfarben
Peintures marines auto polissantes anti-salissures

(30) Priority: 24.07.1991 EP 91870115
(43) Date of publication of application: 03.02.1993
(73) Proprietor: FINA RESEARCH S.A., B-7181 Feluy (BE)
(72) Inventor: Leveque, Pierre, B-1150 Woluwe-Saint-Pierre (BE); Vos, Marcel, NL-1276 BC Huizen (NL); Braeken, Josef, B-9470 Denderleeuw (BE); Haak, Peter, NL-1423 CT Uithoorn (NL)

(56) References cited:
- EP-A- 0 289 481
- PATENT ABSTRACTS OF JAPAN, vol. 13, no. 187 (C-592), 2nd May 1989; & JP-A-01 014 282

## Description

The invention relates to antifouling (AF) marine paint compositions. More particularly, it concerns AF marine paint compositions that can be prepared totally free of organotin and yet give coatings having self-polishing properties.

A growing problem which currently faces the manufacturers of antifouling paints is how to maintain a high standard of performance for coatings used on ship hulls and on immersed parts of offshore structures, under increasingly stringent regulations for the protection of the marine environment. Fouling is one of the most important problems in the protection of ship hulls and other metallic constructions at sea.

The term fouling implies the growth of plants and animals which settle respectively as spores and larvae on submerged surfaces and attach themselves, sometimes very firmly as in the case of algae, tube worms and more particularly with barnacles. The species settling, the speed of settlement and the subsequent growth vary geographically. For instance, the fouling is generally faster in the tropics with warmer temperatures. The consequences of the growing of these aquatic organisms are that the frictional resistance of ships is greatly increased, affecting cruising speeds and fuel consumption. The corrosion of surfaces is accelerated, as the fouling organisms damage the protective coatings. Navigation buoys and offshore constructions increase in weight, so affecting their buoyancy. The list of problems created by fouling is long and the economic costs are large.

Self-polishing antifouling coatings are known in the art. These coatings gradually dissolve so that (i) a fresh antifouling paint surface is continuously revealed, and (ii) moving seawater smoothes the surface of the coating. British Patent 1,124,297 discloses a film-forming copolymer containing a triorganotin comonomer which gives self-polishing antifouling coatings.

The known self-polishing antifouling paints use binders which are linear polymers containing side groups also called leaving groups. These leaving groups are released from the polymer by reaction with seawater, providing a top layer paint which becomes sufficiently dispersible or soluble in sea water and is then swept away from the paint surface. This results in exposing a fresh layer of paint able to undergo a similar reaction with seawater.

The resulting smoothness behaviour is an important property for the self-polishing antifouling paints. Indeed, the smoothness indicates the control of the surface roughness throughout the time and is a function of the erosion of AF paints.

The AF paints based on insoluble or sparingly seawater soluble binder, which don't show this self smoothing property, will present throughout the time more and more defects at the paint surface, which leads to many drawbacks (e.g.: cracks, holes, blisters,...). When using these paints, the recoatability is a major problem. Indeed, if the surface exposes too many defects, it will become necessary to seal completely the coating before each application of a new layer of paint.

The self-polishing antifouling paints generally contain a biocide that is active against fouling. The biocide is usually present as a pigment in the paint. The biocide can also be a part of the binder and then released as leaving group by hydrolysis of the binder. The gradual thinning of the paint film controls the release of the biocide thus delivering the biocide from the surface at a relatively constant rate.

Most self-polishing paints employ hinders that have triorganotin ester leaving groups. The triorganotin ester readily undergoes the hydrolysis on which the self-polishing action is dependent, and the triorganotin released provides a biocidal action. Examples of such paints may be found in British Patents 1,124,297 and 1,457,590 in European Patent Applications 51,930, 151,809 and 218,573 and in Japanese Patent Applications 231061/61 and 231062/61. British Patent application 2,159,827 discloses similar paints with diorganotin leaving groups.

Many countries are introducing new stringent water quality programs, some of which call for a phased reduction in the organotin content of marine paints. Therefore the research in the field of marine paints is focused on tin-free systems.

For example, European Patent 69,559 discloses a copolymer prepared from quinolinyl esters of olefinically unsaturated carboxylic acid with other olefinically unsaturated comonomers, and International Patent Application WO 84/02915 suggests a wide range of organic leaving groups for use in antifouling paint binders, but it has been said that these generally do not hydrolyse quickly enough in seawater. In European patent application 204,444, there is disclosed a binder which is an hydrolysable polymer prepared with a triarylmethyl(meth)acrylate comonomer. However, it is known in the art that the esterification reactions are more difficult with all these comonomers than with triorganotin comonomers ; therefore, the hydrolysis will be more difficult. This explains why a commercial development based on any of these copolymers is still awaited.

International Patent Application WO 86/02660 discloses that certain polycarboxylic polymers, substantially non ionic, are changed by reaction with seawater into polycarboxylate polymers sufficiently dispersible or soluble, and may be used as binders for self-polishing AF paints. However, it is readily apparent that the resulting coatings swell when immersed. Also, these paints, which typically contain zinc oxide or cuprous oxide as the toxic agent, gel on storage.

The Applicant has filed an European Patent Application 289,481 that discloses a marine paint free of organotin and giving self-polishing and antifouling coatings. Although the above identified drawbacks were solved, the optimal performances were not maintained for a sufficiently long period. Recoatability problems were observed with this kind of paint.

There is therefore a need for tin-free self-polishing antifouling marine paints which do not have these drawbacks.

The applicant has found a new type of marine paint composition, which may be prepared without any tin, giving self-polishing antifouling coatings.

The marine paint composition according to the invention comprises :
(i) a first component selected from one or more rosin-based components.
(ii) as binder, a copolymer prepared by polymerisation of :
   (a) from 5 to 40 wt % of at least one monomer A of general formula 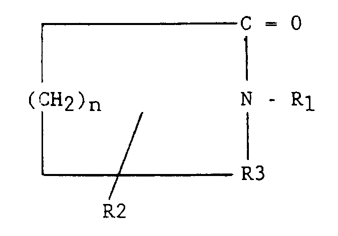 wherein R1 is an alkenyl group when R2 is selected from hydrogen and alkyl groups, R1 is selected from hydrogen and alkyl groups when R2 is an alkenyl group, R3 is selected from methylene or carbonyl, and n is a positive integer,
   (b) from 46 to 95 wt % of at least one comonomer B which is an ester of acrylic acid,
   (c) from 0 to 30 wt % of at least one comonomer C selected from the group of C₁ to C₈ alkyl methacrylates and styrene.
(iii) at least one sparingly soluble metalliferous pigment.
(iv) at least one marine biocide which may be identical to the pigment.

The invention is based on the combination of a reactive binder with a slowly dissolving rosin based component providing compositions which can be used successfully in the marine paint field.

By using marine paints according to the invention in seawater, the Applicant has unexpectedly found that the paint not only keeps well regular antifouling performance throughout the time but also exposes continually a smooth layer at the paint surface. By using marine paint compositions according to the invention it is no more necessary to seal the coating before each application of a new layer paint which represents a considerable advantage over prior art tin-free self-polishing AF marine paints.

Rosin is a loosely used term, denoting the result of a harvesting of the gum exudations from surface cuts made in certain species of trees. Rosin is usually defined as the product obtained from pines ; similar products include congo, damar, kauri and manila gums. Other processes for obtaining rosin include dissolving wood rosin from pine stumps after forests have been felled, or refining a by-product of the Kraft paper manufacturing process to produce tall oil rosin.

Pine-originating rosin is preferably chosen, although similar products may be contemplated providing they have a similar hydrophilic/lipophilic balance.

The main component (about 80 wt %) of rosin is abietic acid, also called sylvic acid (Chemical Abstracts Service Registry Number : 514-10-3), which could be used instead of rosin.

The preferred rosin-based components are rosin itself, its copper or zinc derivatives, hereinafter called copper resinate and zinc resinate, other resinate salts having a comparable solubility, or mixtures thereof. The salts are prepared by any known methods, typically by methathesis with the metal carbonate, hydroxide or hydroxycarbonate. In some case, the transformation of abietic acid into salts thereof may upgrade properties like the melting point, hardness, durability, water or solvent resistance.

It is known that reactions may occur within the paint, for example abietic acid can partially react with other components of the paint like ZnO or Cu₂O, or partial metathesis can occur between metal resinates and other metal derivatives contained in the paint.

The reactive binder is a polymer prepared by polymerisation of
(a) from 5 to 40 wt % of at least one monomer A of general formula 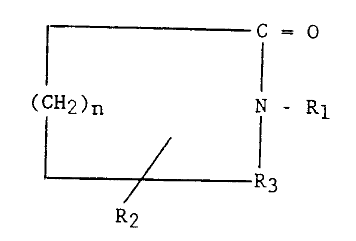 wherein R1 is an alkenyl group when R2 is selected from hydrogen and alkyl groups, R1 is selected from hydrogen and alkyl groups when R2 is an alkenyl group, R3 is selected from methylene or carbonyl, and n is a positive integer,
(b) from 46 to 95 wt % of at least one comonomer B which is an ester of acrylic acid.
(c) from 0 to 30 wt % of at least one comonomer C selected from the group of C₁ to C₈ alkyl methacrylates and styrene.

As monomer A, there may be used any monomer, or combination of monomers, as hereinbefore described. Preferred monomer A are the cyclic tertiary amides having an alkenyl function, such as vinyl group, the most preferred being N-vinylpyrrolidone, N-vinylpiperidone and N-vinylcaprolactam.

The monomers A represent from 5 to 40 wt % of the monomers, preferably from 15 to 30 wt %. If amounts greater than 40 wt % are used, the resulting coating will swell in the seawater, and hence it will have low mechanical properties. On the other hand, if amounts lower than 5 wt % were used, the resulting copolymer will not have the desired properties.

Comonomers B are well known in the polymer film-forming art. Examples of such esters of acrylic acid are (cyclo)alkyl acrylates, aryl acrylates and arylalkyl acrylates. Preferred examples of acrylate comonomers include methyl acrylate, ethyl acrylate, propyl acrylate, butyl acrylate, amyl acrylate, hexyl acrylate, 2-ethylhexyl acrylate, cyclohexyl acrylate, the most preferred being butyl acrylate and methyl acrylate.

The comonomers B represent from 46 to 95 wt % of the monomers, preferably from 50 to 90 wt %, more preferably from 60 to 80 wt %. When using higher amounts, the resulting coating is excessively soft and therefore too sensitive to mechanical damage.

The comonomer C regulates the hardness of the film forming coating. The binder can contain up to 30 wt % of comonomers C. The preferred comonomer C is methyl methacrylate.

The binder can be prepared by addition polymerization using a free radical catalyst, such as benzoyl peroxide, t-butyl peroxybenzoate, t-butyl peroxy 2-ethylhexanoate, 2,2'-azobis-isobutyronitrile, 2,2'-azobis (2,4,4 - trimethylpentane), 2,2'-azobis (2-methylbutyronitrile) in an organic solvent such as xylene, toluene, butyl acetate, butanol, 2-ethoxy ethanol, cyclohexanone, 2-methoxy ethanol, 2-butoxy ethanol, methyl isobutyl ketone, methyl isoamyl ketone, (m)ethyl amyl ketone and/or 2-ethoxyethylacetate.

The polymerisation may be carried out by heating all the ingredients in the solvent or preferably by gradually adding the monomers and catalyst to the heated solvent. A chain transfer agent such as mercaptan can also be used to produce polymers of lower molecular weight. When xylene is used as the organic solvent, polymerisation is preferably carried out at a temperature in the range of 70-140°C.

The weight ratio of the rosin-based component (i) to the binder (ii) is preferably from 10:90 to 70:30, more preferably from 20:80 to 60:40, most preferably from 25:75 to 50:50.

The paint composition according to the invention also comprises at least one sparingly soluble metalliferous pigment, and optionally one or more pigments which are highly insoluble in seawater and/or other biocides.

The metalliferous pigment sparingly soluble in seawater is exemplified by cuprous thiocyanate, cuprous oxide, zinc oxide, cupric acetate meta-arsenate, or zinc chromate. The paint preferably includes at least one metalliferous pigment selected from zinc oxide, cuprous oxide, cuprous thiocyanate and pigments. These pigments have a seawater solubility such that the pigment particles do not survive at the paint surface. The pigment has the effect of inducing the overall smoothing which the relatively-moving seawater exerts on the paint film, minimising localised erosion and preferentially removing excrescences formed during the application of the paint. Mixtures of sparingly soluble pigments can be used, the most preferred being a mixture of zinc oxide, which is most effective at inducing the gradual dissolution of the paint, with cuprous oxide and/or cuprous thiocyanate, which are more effective marine biocides, said mixture preferably comprising at least 25 wt % of cuprous oxide and/or thiocyanate, the balance being zinc oxide.

The paint composition can additionally contain a pigment which is highly insoluble in seawater, such as titanium dioxide or ferric oxide. Such highly insoluble pigments can be used at up to 40 percent by weight of the total pigment component of the paint. The highly insoluble pigment has the effect of retarding the dissolution of the paint.

The proportion of pigment to polymer is generally such as to give a pigment volume concentration of at least 25 percent, preferably at least 35 percent, in the dry paint film. The upper limit of pigment concentration is the critical pigment volume concentration. Paints having pigment volume concentrations of about 50 percent, for example, have been found very effective for smoothing in seawater and preventing fouling.

The paint can contain other biocides effective as antifouling agents. Examples of such biocides, are di-thiocarbamate derivatives such as zinc dimethyl dithiocarbamate, zinc ethylene bis (dithiocarbamate), zinc diethyl dithiocarbamate, cuprous ethylene bis-dithiocarbamate or 2-(N,N-dimethyl thiocarbamyl thio)-5-nitrothiazole, substituted isothiazolones particularly halogenated N-substituted isothiazolones, N-dimethyl-N'-3,4-dichlorophenyl, urea tetramethyl thiuram disulphide tetrachloroiso-phtalonitril, 3-(3,4-dichlorophenyl)-1,1-dimethylurea and 2-methylthio-4-tert-butylamino -6-cyclopropylamino-s-triazine. Other biocides such as pesticides used in the agricultural field can also be used in the paint compositions. The present invention is concerned with self-polishing AF marine paints that do not contain tin in order to protect the marine environment. However, it is clear that any addition of other biocides including triorganotin derivatives, such as tributyltin oxide, tributyltin fluoride or triphenyltin fluoride, would not depart from the present invention.

The invention is described further by the following examples which are intended to be illustrative and by no means limiting.

### Examples

### a) Preparation of the copper resinate

765 parts by weight (pbw) of rosin were dissolved in 275 pbw of white spirit, heated to about 130°C, and 100 pbw of copper hydroxycarbonate were added while stirring. The temperature was increased under reflux to about 175°C until the mixture clears and the colour changes from green to light brown. After cooling, the mixture was diluted to about 70 wt % of dry matter by adding 75 pbw of isopropyl alcohol.

### b) Preparation of the polymer

### b.1. Copolymer solution I

A copolymer was produced by gradually adding over a period of about five hours 2000 parts by weight of methyl acrylate, 1000 parts by weight of butyl acrylate, 1000 parts by weight of vinylpyrrolidone and 32 parts by weight of 2,2'-azobis (2-methyl-butyronitrile) into 3273 parts by weight of xylene heated at 90°C while stirring.
After about 10 hours heating, no further polymerisation was observed by monitoring residual monomers by gas chromatography. The solution was then heated to 105°C for about one hour to destroy any residual activity of the catalyst. The product was cooled and diluted with 727 part by weight of xylene to obtain an approximately 50 wt % solution of polymer having a final viscosity of 0.375 Pa.s, a molecular weight Mw = 26,000 and a glass transition temperature of 24.3°C.

The copolymer solution II to VIII were prepared following the same process as the copolymer solution I. The composition of each copolymer is described in the table A. The measurement of the glass transition temperatures (Tg) of the binders prepared according to the present invention gave values around the ambient temperature or even below, as indicated in table A.

### b.2. Comparative example copolymer solution CEC1

A terpolymer was produced by gradually adding over a period of about five hours 16.7 kg of methyl methacrylate (MMA), 8.3 kg of butyl acrylate (BA) and 1 kg of tert-butyl peroxybenzoate (TBP) to a solution of 12.5 kg of vinylpyrrolidone (VP), 8.3 kg MMA and 4.2 kg BA in 40.9 kg of xylene heated at 115°C while stirring.
After about 12 hours heating, no further polymerisation was observed by monitoring residual monomers by gas chromatography. The solution was then heated to 130°C for about one hour to destroy any residual activity of the catalyst. The product was cooled and diluted with 9.1 kg of xylene to obtain an approximately 50 wt % solution of polymer in xylene. The physical properties are mentioned in table A.

**TABLE A**

| Composition (part by weight) | II | III | IV | V | VI | VII | VIII | CEC1 |
|---|---|---|---|---|---|---|---|---|
| Cooking solvent | | | | | | | | |
| Xylene | 3273 | 3273 | 3273 | 3273 | 3273 | 3273 | 3273 | 409 |

| Comonomers | | | | | | | | |
|---|---|---|---|---|---|---|---|---|
| Vinylpyrrolidone | 600 | | 1200 | 1000 | 1000 | 1000 | 1000 | 125 |
| Vinylcoprolactam | | 1400 | | | | | | |
| Methylacrylate | 2400 | 1600 | 1600 | 1600 | 3000 | | | |
| Butylacrylate | 1000 | 1000 | 536 | 552 | | 1000 | 2000 | 125 |
| Methylmethacrylate | | 664 | 848 | | | | | 250 |
| Ethyl acrylate | | | | | | 2000 | 1000 | |

| Radical initiator | | | | | | | | |
|---|---|---|---|---|---|---|---|---|
| 2,2' - azobis(2-methyl Butylonitrile) | 32 | 32 | 32 | 32 | 32 | 32 | 32 | |
| tert-butyl peroxybenzoate | | | | | | | | 10 |

| Diluting solvent | | | | | | | | |
|---|---|---|---|---|---|---|---|---|
| Xylene | 727 | 727 | 727 | 727 | 727 | 727 | 727 | 91 |

| Physical property | | | | | | | | |
|---|---|---|---|---|---|---|---|---|
| Appearance of polymer solution | Clear | clear | clear | clear | clear | clear | clear | clear |
| Viscosity of polymer solution (Pa.s) | 0.2 | 0.4 | 8.8 | 8.2 | 0.5 | 0.14 | 0.2 | 2.7 |
| Molecular weight of polymer (Mw x 10³) | 22 | 25 | 93 | 98 | 20.3 | 20.9 | 21.0 | 85.0 |
| Tg (°C) | 18.7 | 23.1 | 26.0 | 20.7 | 26.1 | 16.2 | 15.6 | 45.0 |

### C. Preparation of the paint composition

### C.1. Paint formulation A

7.4 pbw of the copper resinate solution were mixed with 19.1 pbw of the copolymer solution I, then blended with 30.6 pbw of cuprous oxide, 24.5 pbw of zinc oxide, 1.4 pbw of Bayferrox 222 FM (registred trademark of Bayer, ferrous oxide), 1.0 pbw of Bentone 38 as anti-setting agent (tradename for quaternium-(18) hectorite of NL Industries), 0.56 pbw of thixatrol ST (registred trademark of NL Industries, organic derivative of castor oil), 3.3 pbw of Diuron (3-(3,4-dichlorophenyl)-1,1-dimethylurea) as biocide agent and further additional solvents 9.1 pbw of xylene with 3.4 pbw of isobutanol. The final paint has a viscosity of 2.3 Pa.s.

The paints B to N were prepared following the same process as the paint formulation A. The paint composition of each paint is described in the table B and C.

### C.2. Comparative example paint formulations CEP

The paints CEP1 and CEP2 were prepared following the same process as the paint formulation A. The paint compositions are described in the table C. Irgarol 1051 (registred trademark of CIBA-CEIGY, 2-methylthio-4-tert-butyl-amino-6-cyclopropylamino-s-triazine) and Nebocide 2000 (zinc ethylene-N,N-bisdithiocarbamate) are used as biocide agents in the paint formulations.

**TABLE B**

| Composition (percent by weight) | B | C | D | E | F | G | H |
|---|---|---|---|---|---|---|---|
| Copolymer solution (II) | 19.1 | | | | | | |
| Copolymer solution (III) | | 19.1 | | | | | |
| Copolymer solution (IV) | | | 19.1 | | | | |
| Copolymer solution (V) | | | | 19.1 | | | |
| Copolymer solution (VI) | | | | | 19.1 | | |
| Copolymer solution (VII) | | | | | | 19.1 | |
| Copolymer solution (VIII) | | | | | | | 19.1 |
| Copper resinate | 7.4 | 7.4 | 7.4 | 7.4 | 7.4 | 7.4 | 7.4 |
| Cuprous oxide | 30.6 | 30.6 | 30.6 | 30.6 | 30.6 | 30.6 | 30.6 |
| Zinc oxide | 24.5 | 24.5 | 24.5 | 24.5 | 24.5 | 24.5 | 24.5 |
| Bayferrox 222 FM | 1.4 | 1.4 | 1.4 | 1.4 | 1.4 | 1.4 | 1.4 |
| Bentone 38 | 1.0 | 1.0 | 1.0 | 1.0 | 1.0 | 1.0 | 1.0 |
| Thixatrol ST | 0.56 | 0.56 | 0.56 | 0.56 | 0.56 | 0.56 | 0.56 |
| Diuron | 3.3 | 3.3 | 3.3 | 3.3 | 3.3 | 3.3 | 3.3 |
| Xylene | 9.0 | 9.0 | 9.0 | 9.0 | 9.0 | 9.0 | 9.0 |
| Isobutanol | 3.14 | 3.14 | 3.14 | 3.14 | 3.14 | 3.14 | 3.14 |
| Physical property Viscosity of paint (Pa.s) | 2.3 | 3.0 | 2.6 | 2.7 | 2.6 | 2.8 | 2.5 |

**TABLE C**

| Composition (percent by weight) | I | J | K | L | M | N | CEP1 | CEP2 |
|---|---|---|---|---|---|---|---|---|
| Copolymer solution (II) | 19.1 | | | | | | | |
| Copolymer solution (III) | | 19.1 | | | | | | |
| Copolymer solution (IV) | | | 19.1 | | | | | |
| Copolymer solution (V) | | | | 19.1 | | | | |
| Copolymer solution (VI) | | | | | 19.1 | | | |
| Copolymer solution (VII) | | | | | | 19.1 | | |
| Copolymer solution CEC1 | | | | | | | 18.0 | 18.0 |
| Copper resinate | | | | | | | 6.1 | 6.1 |
| Zinc resinate | 7.4 | 7.4 | 7.4 | 7.4 | 7.4 | 7.4 | | |
| Cuprous oxide | 30.6 | 30.6 | 30.6 | 30.6 | 30.6 | 30.6 | 32.4 | 32.4 |
| Zinc oxide | 24.5 | 24.5 | 24.5 | 24.5 | 24.5 | 24.5 | 25.0 | 25.0 |
| Bayferrox 222 FM | 1.4 | 1.4 | 1.4 | 1.4 | 1.4 | 1.4 | 0.79 | 0.79 |
| Bentone 38 | 1.0 | 1.0 | 1.0 | 1.0 | 1.0 | 1.0 | 0.90 | 0.90 |
| Thixatrol ST | 0.56 | 0.56 | 0.56 | 0.56 | 0.56 | 0.56 | 0.51 | 0.51 |
| Diuron | 3.3 | | | 3.3 | | 3.3 | | |
| Irgarol 1051 | | 3.3 | | | 3.3 | | | 2.8 |
| Nebocide 2000 | | | 3.3 | | | | 2.8 | |
| Xylene | 9.0 | 9.0 | 9.0 | 9.0 | 9.0 | 9.0 | 9.1 | 9.1 |
| Isobutanol | 3.14 | 3.14 | 3.14 | 3.14 | 3.14 | 3.14 | 4.4 | 4.4 |
| Physical property Viscosity of paint (Pa.s) | 2.2 | 2.6 | 2.3 | 3.1 | 2.0 | 2.7 | 2.4 | 2.8 |

### D. Evaluation of the self-polishing properties

The antifouling paint (formulation A) obtained was tested for its self-polishing properties according to the following procedure. A steel disc of 20 cm diameter was first coated with a 220 »m dry film thickness layer of a commercially available anti-corrosive paint based on coal tar and epoxy resin. The antifouling paint was applied as a layer having a dry film thickness of about 120 »m within 48 hours from the time the anti-corrosive paint layer became dry to the touch. After drying, the disc was rotated in a tank filled with continuously renewed natural seawater at a temperature of 20°C. The circumferential speed of the disc was about 19 knots (35 km/h).
Thickness measurements were made after 5 weeks periods, on 15 different places at 9 cm from the disc's centre, over 542 days. The average erosion rate was 5.0 »m/month.
For comparative purposes, a second steel disc was coated according to the same procedure as above, and tested for the same period.
The eroded coating was slightly smoother than the reference coating.

### E. Evaluation of the antifouling properties

The paint formulation A obtained was also tested for antifouling activity by applying it to a panel over a vinyl resins/tar anti-corrosive paint, mounting the panel on a panel and immersing the panel from a raft in an estuary of Southern Netherlands for 18 months. Each panel also included plaques coated with a non-toxic control (which became heavily fouled with seaweed and some animal life within 4 weeks). No weed or animal fouling was observed on the panels coated with the paint of the invention, and the algae slime was practically non-existent.

The marine paints A to N, as well as the comparative examples CEP1 and CEP2 were tested for their self-polishing and antifouling performances as described in the test mentioned hereabove. The results are described in the following tables :

| Paint formulations | A | B | C | D | E | F | G | H |
|---|---|---|---|---|---|---|---|---|
| Self-polishing⁺⁺⁺ | | | | | | | | |
| 2 months | 5.2 | 4.6 | 4.7 | 3.7 | 3.5 | 5.0 | 4.8 | 4.8 |
| 4 months | 5.1 | 4.4 | 4.2 | 3.9 | 3.7 | 5.8 | 4.7 | 4.3 |
| 6 months | 4.7 | 3.8 | 3.7 | 4.4 | 3.2 | 4.9 | 5.1 | 3.8 |
| 8 months | 5.3 | 4.0 | 3.9 | 4.7 | 2.8 | 4.7 | 4.5 | 3.7 |
| 10 months | 4.8 | 3.7 | 4.1 | 3.9 | 3.4 | 5.1 | 4.2 | 4.1 |
| 12 months | 4.9 | 3.6 | 3.6 | 3.7 | 3.2 | 5.2 | 4.3 | 4.4 |
| 18 months | 5.0 | 4.0 | 3.4 | 3.7 | 3.0 | X | X | X |
| 24 months | X | X | X | X | X | X | X | X |

| Anti-fouling*** | | | | | | | | |
|---|---|---|---|---|---|---|---|---|
| 2 months | 0 | 0 | 0 | 0 | 0 | 0 | 0 | 0 |
| 4 months | 0 | 0 | 0 | 0 | 0 | 0 | 0 | 0 |
| 6 months | 0 | 0 | 0 | 0 | 0 | 0 | 0 | 0 |
| 8 months | 0 | 0 | 0 | 0 | 0 | 0 | 0 | 0 |
| 10 months | 0 | 0 | 0 | 0 | 0 | 0 | 0 | 0 |
| 12 months | 0 | 0 | 0 | 0 | 0 | 0 | 0 | 0 |
| 18 months | 0 | 5 | 5 | 0 | 0 | X | X | X |
| 24 months | X | X | X | X | X | X | X | X |

| | | | | | | | | |
|---|---|---|---|---|---|---|---|---|
| ⁺⁺⁺ Average erosion rate in »m/month. | | | | | | | | |
| *** Surface area (%) adhered noxious aquatic life. | | | | | | | | |
| X These paints are being tested on the raft. | | | | | | | | |

| Paint formulations | I | J | K | L | M | N | CEP1 | CEP2 |
|---|---|---|---|---|---|---|---|---|
| Self-polishing⁺⁺⁺ | | | | | | | | |
| 2 months | 3.2 | 4.7 | 5.7 | 8.1 | 3.1 | 4.1 | 5.1 | 4.8 |
| 4 months | 2.7 | 4.2 | 4.7 | 6.1 | 2.6 | 3.7 | 4.8 | 3.2 |
| 6 months | 3.6 | 3.7 | 4.9 | 4.2 | 2.9 | 3.7 | 3.3^{!!} | 1.1^{!!} |
| 8 months | 3.1 | 3.2 | 4.5 | 4.7 | 3.4 | 4.8 | 3.0^{!!} | 0.1^{!!} |
| 10 months | 2.4 | 3.6 | 4.2 | 4.6 | 3.7 | 3.3 | 2.2^{!!} | 0.4^{!!} |
| 12 months | 2.9 | 3.2 | 3.7 | 3.7 | 2.9 | 2.9 | 0.2^{!!} | 0.1^{!!} |
| 18 months | X | 2.9 | 3.8 | 4.9 | 3.4 | 3.2 | 0.3^{!!} | 0.2^{!!} |
| 24 months | X | X | X | X | X | X | 0.1^{!!} | 0.3^{!!} |

| Anti-fouling*** | | | | | | | | |
|---|---|---|---|---|---|---|---|---|
| 2 months | 0 | 0 | 0 | 0 | 0 | 0 | 0 | 0 |
| 4 months | 0 | 0 | 0 | 0 | 0 | 0 | 0 | 0 |
| 6 months | 0 | 0 | 0 | 0 | 0 | 0 | 0 | 0 |
| 8 months | 0 | 0 | 0 | 0 | 0 | 0 | 0 | 0 |
| 10 months | 0 | 0 | 0 | 0 | 0 | 0 | 5 | 10 |
| 12 months | 5 | 5 | 5 | 5 | 5 | 5 | 15 | 15 |
| 18 months | X | 5 | 10 | 10 | 5 | 5 | 20 | 15 |
| 24 months | X | X | X | X | X | X | 30 | 20 |

| | | | | | | | | |
|---|---|---|---|---|---|---|---|---|
| ⁺⁺⁺ Average erosion rate in »m/month. | | | | | | | | |
| *** Surface area (%) adhered noxious aquatic life. | | | | | | | | |
| X These paints are being tested on the raft. | | | | | | | | |
| ^{!!} Some defects appear on the surface (e.g. : cracks, blisters). | | | | | | | | |

## Claims (Claims for the following Contracting State(s): BE, DE, DK, FR, GB, GR, IT, NL, PT, SE)

1. Marine paint composition comprising :
(i) a first component selected from one or more rosin-based components.
(ii) as binder, a copolymer prepared by polymerisation of :
(a) from 5 to 40 wt % of at least one monomer A of general formula : 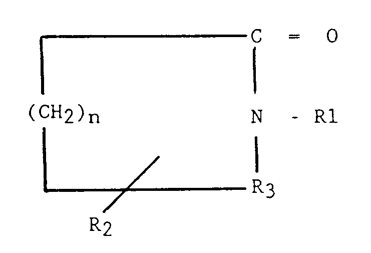 wherein R1 is an alkenyl group when R2 is selected from hydrogen and alkyl groups, R1 is selected from hydrogen and alkyl groups when R2 is an alkenyl group, R3 is selected from methylene or carbonyl, and n is a positive integer,
(b) from 46 to 95 wt % of at least one comonomer B which is an ester of acrylic acid,
(c) from 0 to 30 wt % of at least one comonomer C selected from the group of C₁ to C₈ alkyl methacrylates and styrene.
(iii) at least one sparingly soluble metalliferous pigment.
(iv) at least one marine biocide which may be identical to the pigment.

2. Paint according to Claim 1, additionally comprising for up to 40 wt % of the total weight of the pigments, one or more pigments which are highly insoluble in seawater.

3. Paint according to Claim 1 or 2, wherein the rosin-based component (i) is selected from rosin, copper resinate, zinc resinate, or mixtures thereof.

4. Paint according to anyone of the preceding Claims, wherein monomer A is selected from N-vinylpyrrolidone, N-vinylpiperidone, N-vinylcaprolactam, or mixtures thereof and monomer B is butyl acrylate, methyl acrylate, or mixtures thereof.

5. Paint according to anyone of the preceding Claims wherein comonomer C is methyl methacrylate.

6. Paint according to anyone of the preceding Claims, wherein monomer A represents from 15 to 30 wt % of the monomer composition and monomer B represents from 50 to 90 wt % of the monomer composition.

7. Paint according to anyone of the preceding Claims wherein the weight ratio of component (i) : component (ii) is from 20:80 to 60:40, preferably from 25:75 to 50:50.

8. Paint according to anyone of the preceding Claims, wherein the sparingly soluble metalliferous pigment is selected from Zinc oxide, cuprous oxide, cuprous thiocyanate or mixtures thereof.

9. Paint according to Claim 8, wherein the sparingly soluble metalliferous pigment is a mixture comprising at least 25 wt % of cuprous oxide and/or thiocyanate, the balance being zinc oxide.

## Claims (Claims for the following Contracting State(s): ES)

1. Process for preventing the fouling of ship hulls and immersed parts of offshore structures, comprising the step of coating with a marine paint composition comprising :
(i) a first component selected from one or more rosin-based components.
(ii) as binder, a copolymer prepared by polymerisation of :
(a) from 5 to 40 wt % of at least one monomer A of general formula : 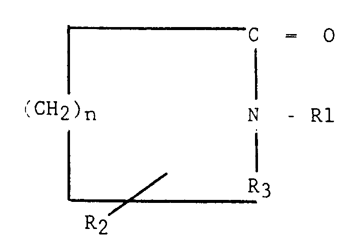 wherein R1 is an alkenyl group when R2 is selected from hydrogen and alkyl groups, R1 is selected from hydrogen and alkyl groups when R2 is an alkenyl group, R3 is selected from methylene or carbonyl, and n is a positive integer,
(b) from 46 to 95 wt % of at least one comonomer B which is an ester of acrylic acid,
(c) from 0 to 30 wt % of at least one comonomer C selected from the group of C₁ to C₈ alkyl methacrylates and styrene.
(iii) at least one sparingly soluble metalliferous pigment.
(iv) at least one marine biocide which may be identical to the pigment.

2. Process according to Claim 1, wherein the paint composition additionally comprises for up to 40 wt % of the total weight of the pigments, one or more pigments which are highly insoluble in seawater.

3. Process according to Claim 1 or 2, wherein the rosin-based component (i) in the paint is selected from rosin, copper resinate, zinc resinate, or mixtures thereof.

4. Process according to anyone of the preceding Claims, wherein monomer A in the binder is selected from N-vinylpyrrolidone, N-vinylpiperidone, N-vinylcaprolactam, or mixtures thereof and monomer B is butyl acrylate, methyl acrylate, or mixtures thereof.

5. Process according to anyone of the preceding Claims wherein comonomer C in the binder is methyl methacrylate.

6. Process according to anyone of the preceding Claims, wherein, in the binder, monomer A represents from 15 to 30 wt % of the monomer composition and monomer B represents from 50 to 90 wt % of the monomer composition.

7. Process according to anyone of the preceding Claims wherein the weight ratio of component (i) : component (ii) in the paint is from 20:80 to 60:40, preferably from 25:75 to 50:50.

8. Process according to anyone of the preceding Claims, wherein the sparingly soluble metalliferous pigment in the paint is selected from zinc oxide, cuprous oxide, cuprous thiocyanate or mixtures thereof.

9. Process according to Claim 8, wherein the sparingly soluble metalliferous pigment is a mixture comprising at least 25 wt % of cuprous oxide and/or thiocyanate, the balance being zinc oxide.

## Patentansprüche (Patentansprüche für folgende(n) Vertragsstaat(en): BE, DE, DK, FR, GB, GR, IT, NL, PT, SE)

1. Unterwasser-Anstrichzusammensetzung, die folgendes enthält:
(i) einen ersten Bestandteil, der aus einem oder mehreren auf Kolophonium basierenden Bestandteilen ausgewählt ist,
(ii) als Bindemittel ein Copolymer, das durch die Polymerisation von folgendem hergestellt wird:
(a) 5 bis 40 Gew.-% mindestens eines Monomers A mit der folgenden allgemeinen Formel 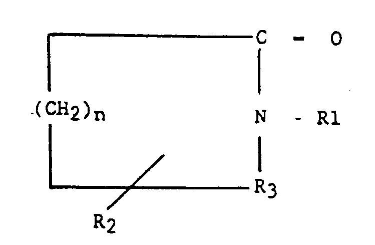 in der R1 für eine Alkenyl-Gruppe steht, wenn R2 aus Wasserstoff und Alkyl-Gruppen ausgewählt ist, R1 aus Wasserstoff und Alkyl-Gruppen ausgewählt ist, wenn R2 für eine Alkenyl-Gruppe steht, R3 aus Methylen oder Carbonyl ausgewählt ist und n für eine positive ganze Zahl steht,
(b) 46 bis 95 Gew.-% mindestens eines Comonomers B, bei dem es sich um einen Ester der Acrylsäure handelt,
(c) 0 bis 30 Gew.-% mindestens eines Comonomers C, das aus der Gruppe C₁-C₈-Alkylmethacrylate und Styrol ausgewählt ist;
(iii) mindestens ein schwerlösliches metallhaltiges Pigment,
(iv) mindestens ein Unterwasser-Biocid, das mit dem Pigment identisch sein kann.

2. Anstrich nach Anspruch 1, der außerdem bis zu 40 Gew.-% des Gesamtgewichts der Pigmente an einem oder mehreren Pigmenten enthält, die in Seewasser hochunlöslich sind.

3. Anstrich nach Anspruch 1 oder 2, wobei der auf Kolophonium basierende Bestandteil (i) aus Kolophonium, Kupfer-Resinat, Zink-Resinat oder Gemischen daraus ausgewählt ist.

4. Anstrich nach einem der vorhergehenden Ansprüche, wobei das Monomer A aus N-Vinylpyrrolidon, N-Vinylpiperidon, N-Vinylcaprolactam oder Gemischen daraus ausgewählt ist und wobei es sich bei Monomer B um Butylacrylat, Methylacrylat oder Gemische daraus handelt.

5. Anstrich nach einem der vorhergehenden Ansprüche, wobei es sich bei Comonomer C um Methylacrylat handelt.

6. Anstrich nach einem der vorhergehenden Ansprüche, wobei Monomer A 15 bis 30 Gew.-% der Monomer-Zusammensetzung darstellt und Monomer B 50 bis 90 Gew.-% der Monomer-Zusammensetzung darstellt.

7. Anstrich nach einem der vorhergehenden Ansprüche, wobei des Gewichtsverhältnis von Bestandteil (i) : Bestandteil (ii) 20:80 bis 60:40, vorzugsweise 25:75 bis 50:50, beträgt.

8. Anstrich nach einem der vorhergehenden Ansprüche, wobei das schwerlösliche metallhaltige Pigment aus Zinkoxid, Kupfer(I)-oxid, Kupfer(I)-thiocyanat und Gemischen daraus ausgewählt ist.

9. Anstrich nach Anspruch 8, wobei es sich bei dem schwerlöslichen metallhaltigen Pigment um ein Gemisch handelt, das mindestens 25 Gew.-% Kupfer(I)-oxid und/oder -thiocyanat mit Zinkoxid als Rest enthält.

## Patentansprüche (Patentansprüche für folgende(n) Vertragsstaat(en): ES)

1. Verfahren zur Verhütung des Fouling von Schiffskörpern und untergetauchten Teilen von küstennahen Konstruktionen, bei dem mit einer Unterwasser-Anstrichzusammensetzung überzogen wird, die folgendes enthält:
(i) einen ersten Bestandteil, der aus einem oder mehreren auf Kolophonium basierenden Bestandteilen ausgewählt ist,
(ii) als Bindemittel ein Copolymer, das durch die Polymerisation von folgendem hergestellt wird:
(a) 5 bis 40 Gew.-% mindestens eines Monomers A mit der folgenden allgemeinen Formel 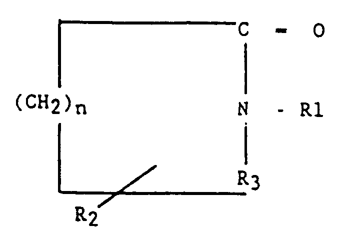 in der R1 für eine Alkenyl-Gruppe steht, wenn R2 aus Wasserstoff und Alkyl-Gruppen ausgewählt ist, R1 aus Wasserstoff und Alkyl-Gruppen ausgewählt ist, wenn R2 für eine Alkenyl-Gruppe steht, R3 aus Methylen oder Carbonyl ausgewählt ist und n für eine positive ganze Zahl steht,
(b) 46 bis 95 Gew.-% mindestens eines Comonomers B, bei dem es sich um einen Ester der Acrylsäure handelt,
(c) 0 bis 30 Gew.-% mindestens eines Comonomers C, das aus der Gruppe C₁-C₈-Alkylmethacrylate und Styrol ausgewählt ist;
(iii) mindestens ein schwerlösliches metallhaltiges Pigment,
(iv) mindestens ein Unterwasser-Biocid, das mit dem Pigment identisch sein kann.

2. Verfahren nach Anspruch 1, wobei die Anstrichzusammensetzung außerdem bis zu 40 Gew.-% des Gesamtgewichts an einem oder mehreren Pigmenten enthält, die in Seewasser hochunlöslich sind.

3. Verfahren nach Anspruch 1 oder 2, wobei der auf Kolophonium basierende Bestandteil (i) in dem Anstrich aus Kolophonium, Kupfer-Resinat, Zink-Resinat oder Gemischen daraus ausgewählt ist.

4. Verfahren nach einem der vorhergehenden Ansprüche, wobei das Monomer A in dem Bindemittel aus N-Vinylpyrrolidon, N-Vinylpiperidon, N-Vinylcaprolactam oder Gemischen daraus ausgewählt ist und wobei es sich bei Monomer B um Butylacrylat, Methylacrylat oder Gemische daraus handelt.

5. Verfahren nach einem der vorhergehenden Ansprüche, wobei es sich bei Comonomer C in dem Bindemittel um Methylacrylat handelt.

6. Verfahren nach einem der vorhergehenden Ansprüche, wobei in dem Bindemittel das Monomer A 15 bis 30 Gew.-% der Monomer-Zusammensetzung darstellt und das Monomer B 50 bis 90 Gew.-% der Monomer-Zusammensetzung darstellt.

7. Verfahren nach einem der vorhergehenden Ansprüche, wobei des Gewichtsverhältnis von Bestandteil (i) : Bestandteil (ii) in dem Anstrich 20:80 bis 60:40, vorzugsweise 25:75 bis 50:50, beträgt.

8. Verfahren nach einem der vorhergehenden Ansprüche, wobei das schwerlösliche metallhaltige Pigment in dem Anstrich aus Zinkoxid, Kupfer(I)-oxid, Kupfer(I)-thiocyanat und Gemischen daraus ausgewählt ist.

9. Verfahren nach Anspruch 8, wobei es sich bei dem schwerlöslichen metallhaltigen Pigment um ein Gemisch handelt, das mindestens 25 Gew.-% Kupfer(I)-oxid und/oder -thiocyanat mit Zinkoxid als Rest enthält.

## Revendications (Revendications pour l'(les) Etat(s) contractant(s) suivant(s): BE, DE, DK, FR, GB, GR, IT, NL, PT, SE)

1. Composition de peinture marine comprenant :
(i) un premier composant choisi parmi un ou plusieurs composants à base de colophane.
(ii) comme liant, un copolymère obtenu par polymérisation de :
(a) de 5 à 40 % en poids d'au moins un monomère A de formule générale 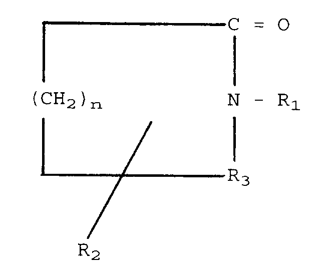 où R₁ est un radical alcényle quand R₂ est choisi parmi l'hydrogène et les radicaux alkyles, R₁ est choisi parmi l'hydrogène et les radicaux alkyles quand R₂ est un radical alcényle, R₃ est choisi parmi le méthylène et carbonyle, et n est un entier positif,
(b) de 46 à 95 % en poids d'au moins un comonomère B qui est un ester d'acide acrylique,
(c) de 0 à 30 % en poids d'au moins un comonomère C choisi parmi les alkyle méthacrylates en C₁-C₈ et le styrène.
(iii) au moins un pigment métallifère partiellement soluble.
(iv) au moins un biocide marin qui peut ou non être identique au pigment.

2. Peinture selon la revendication 1 comprenant en addition jusqu'à 40 % en poids, par rapport au poids total des pigments, d'un ou plusieurs pigments qui sont hautement insolubles dans l'eau de mer.

3. Peinture selon la revendication 1 ou 2 où le composé à base de colophane (i) est choisi parmi la colophane, le résinate de cuivre, le résinate de zinc, ou leur mélange.

4. Peinture selon l'une quelconque des revendications précédentes où le monomère A est choisi parmi N-vinylpyrrolidone, N-vinylpiperidone, N-vinylcaprolactame, ou leur mélange, et le monomère B est l'acrylate de butyle, l'acrylate de méthyle, ou leur mélange.

5. Peinture selon l'une quelconque des revendications précédentes où le comonomère C est le méthacrylate de méthyle.

6. Peinture selon l'une quelconque des revendications précédentes où le monomère A représente de 15 à 30 % en poids de la composition de monomère et le monomère B représente de 50 à 90 % en poids de la composition de monomère.

7. Peinture selon l'une quelconque des revendications précédentes où le rapport pondéral du composé (i) : composé (ii) est de 20:80 à 60:40, de préférence de 25:75 à 50:50.

8. Peinture selon l'une quelconque des revendications précédentes où le pigment métallifère partiellement soluble est choisi parmi l'oxyde de zinc, l'oxyde de cuivre, le thiocyanate cuivreux ou leur mélange.

9. Peinture selon la revendication 8 où le pigment métallifère partiellement soluble est un mélange comprenant au moins 25 % en poids d'oxyde de cuivre et/ou de thiocyanate, le solde étant l'oxyde de zinc.

## Revendications (Revendications pour l'(les) Etat(s) contractant(s) suivant(s): ES)

1. Procédé pour prévenir la salissure des coques de bateaux et des parties immergées des structures offshores, comprenant l'étape de recouvrement au moyen d'une composition de peinture marine comprenant :
(i) un premier composant choisi parmi un ou plusieurs composants à base de colophane.
(ii) comme liant, un copolymère obtenu par polymérisation de :
(a) de 5 à 40 % en poids d'au moins un monomère A de formule générale 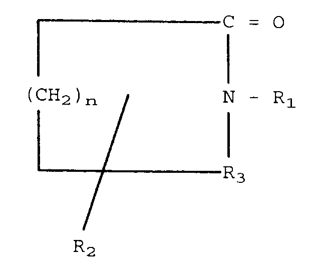 où R₁ est un radical alcényle quand R₂ est choisi parmi l'hydrogène et les radicaux alkyles, R₁ est choisi parmi l'hydrogène et les radicaux alkyles quand R₂ est un radical alcényle, R₃ est choisi parmi le méthylène et carbonyle, et n est un entier positif,
(b) de 46 à 95 % en poids d'au moins un comonomère B qui est un ester d'acide acrylique,
(c) de 0 à 30 % en poids d'au moins un comonomère C choisi parmi les alkyle méthacrylates en C₁-C₈ et le styrène.
(iii) au moins un pigment métallifère partiellement soluble.
(iv) au moins un biocide marin qui peut ou non être identique au pigment.

2. Procédé selon la revendication 1 comprenant en addition jusqu'à 40 % en poids, par rapport au poids total des pigments, d'un ou plusieurs pigments qui sont hautement insolubles dans l'eau de mer.

3. Procédé selon la revendication 1 ou 2 où le composé à base de colophane (i) est choisi parmi la colophane, le résinate de cuivre, le résinate de zinc, ou leur mélange.

4. Procédé selon l'une quelconque des revendications précédentes où le monomère A est choisi parmi N-vinylpyrrolidone, N-vinylpiperidone, N-vinylcaprolactame, ou leur mélange, et le monomère B est l'acrylate de butyle, l'acrylate de méthyle, ou leur mélange.

5. Procédé selon l'une quelconque des revendications précédentes où le comonomère C est le méthacrylate de méthyle.

6. Procédé selon l'une quelconque des revendications précédentes où le monomère A représente de 15 à 30 % en poids de la composition de monomère et le monomère B représente de 50 à 90 % en poids de la composition de monomère.

7. Procédé selon l'une quelconque des revendications précédentes où le rapport pondéral du composé (i) : composé (ii) est de 20:80 à 60:40, de préférence de 25:75 à 50:50.

8. Procédé selon l'une quelconque des revendications précédentes où le pigment métallifère partiellement soluble est choisi parmi l'oxyde de zinc, l'oxyde de cuivre, le thiocyanate cuivreux ou leur mélange.

9. Procédé selon la revendication 8 où le pigment métallifère partiellement soluble est un mélange comprenant au moins 25 % en poids d'oxyde de cuivre et/ou de thiocyanate, le solde étant l'oxyde de zinc.
